# EUROPEAN PATENT APPLICATION

(11) **EP 4 693 252 A1**
(43) Date of publication of application: **11.02.2026**
(21) Application number: 24796160.0
(22) Date of filing: 25.04.2024
(51) Int. Cl.: G08G 1/123

(54) **VEHICLE POSITIONING METHOD, VEHICLE SEARCHING METHOD, ELECTRONIC DEVICE, AND VEHICLE**

(30) Priority: 28.04.2023 CN 202310485846
(71) Applicant: Huawei Technologies Co., Ltd., Shenzhen, Guangdong 518129 (CN)
(72) Inventor: CHEN, Shengyang, Shenzhen, Guangdong 518129 (CN); YANG, Jinghuan, Shenzhen, Guangdong 518129 (CN); LI, Wei, Shenzhen, Guangdong 518129 (CN); LIU, Qiangbo, Shenzhen, Guangdong 518129 (CN); XU, Weichang, Shenzhen, Guangdong 518129 (CN)
(74) Representative: MERH-IP Matias Erny Reichl Hoffmann Patentanwälte PartG mbB
(86) International application number: PCT/CN2024/089758
(87) International publication number: WO 2024/222784

(57) **Abstract**

A vehicle positioning method is provided, and includes: when a vehicle travels into an indoor parking lot, capturing, by using a camera in the vehicle, an image at a track point included on a traveling track of the vehicle in a traveling process of the vehicle; obtaining a first traveling track of the vehicle on a target floor in the indoor parking lot, where the target floor is a floor on which the vehicle is currently located; calculating position information of a current position of the vehicle in the indoor parking lot based on semantic information included in an image at a track point on the first traveling track, where the position information includes a floor and/or a zone; and when the current position of the vehicle is a parking space, outputting position information of the parking space in the indoor parking lot. In this way, the traveling track of the vehicle is combined with the image captured by the camera of the vehicle, so that the vehicle is positioned in the indoor parking lot. This reduces costs of positioning the vehicle in the indoor parking lot, and the user can quickly learn of the position of the vehicle of the user, thereby improving user experience.

## Description

This application claims priority to Chinese Patent Application No. 202310485846.8, filed with the China National Intellectual Property Administration on April 28, 2023 and entitled "VEHICLE POSITIONING METHOD, VEHICLE FINDING METHOD, ELECTRONIC DEVICE, AND VEHICLE", which is incorporated herein by reference in its entirety.

### TECHNICAL FIELD

This application relates to the field of information technology (information technology, IT) technologies, and in particular, to a vehicle positioning method, a vehicle finding method, an electronic device, and a vehicle.

### BACKGROUND

Currently, when parked in an outdoor parking lot, a vehicle can be conveniently positioned by using a global navigation satellite system (global navigation satellite system, GNSS), such as a BeiDou navigation satellite system (BeiDou navigation satellite system, BDS), a global positioning system (global positioning system, GPS), or a Galileo satellite navigation system (Galileo satellite navigation system), to conveniently find the vehicle. However, when the vehicle is parked in an indoor parking lot (for example, an underground garage), because a GNSS signal in the indoor parking lot is relatively poor, it is difficult to perform positioning by using the GNSS. Consequently, when the vehicle is parked in the indoor parking lot, it is difficult for a user to find the vehicle. Therefore, how to allow the user to conveniently find the vehicle parked in the indoor parking lot is a technical problem that needs to be urgently resolved at present.

### SUMMARY

This application provides a vehicle positioning method, a vehicle finding method, an electronic device, a vehicle, a computer storage medium, and a computer product, so that a user can conveniently find a vehicle when parking in an indoor parking lot.

According to a first aspect, this application provides a vehicle positioning method, including: when a vehicle travels into an indoor parking lot, capturing, by using a camera in the vehicle, an image at a track point included on a traveling track of the vehicle in a traveling process of the vehicle; obtaining a first traveling track of the vehicle on a target floor in the indoor parking lot, where the target floor is a floor on which the vehicle is currently located; calculating position information of a current position of the vehicle in the indoor parking lot based on semantic information included in an image at a track point on the first traveling track, where the position information includes a floor and/or a zone; and when the current position of the vehicle is a parking space, outputting position information of the parking space in the indoor parking lot. For example, the current position of the vehicle may be a real-time position of the vehicle in the indoor parking lot, for example, a position 10 meters away from an entrance on basement level 1 of the indoor parking lot. The position information of the current position of the vehicle in the indoor parking lot may be a target floor of the vehicle in the indoor parking lot and/or a zone on the target floor, for example, a zone A on basement level 1. In addition, the zone included in the position information may be understood as one of a plurality of zones into which a parking zone on a floor is divided. For example, when a parking zone on basement level 1 in the indoor parking lot is divided into three zones: A, B, and C, if the current position of the vehicle is the zone B, the zone in the position information may be the zone B. For example, a position of a parking space may be understood as a position of the vehicle when a gear position of the vehicle is a parking gear.

In this way, the traveling track of the vehicle is combined with the image captured by the camera of the vehicle, so that the vehicle is positioned in the indoor parking lot. This reduces costs of vehicle positioning in the indoor parking lot while ensuring positioning accuracy, and enables the user to learn of the position of the vehicle of the user in a short time after the vehicle is parked, thereby improving user experience.

In a possible implementation, when the gear position of the vehicle is the parking gear, it is determined that the current position of the vehicle is a parking space.

In a possible implementation, outputting the position information of the parking space in the indoor parking lot specifically includes: outputting the position information of the parking space in the indoor parking lot by using an SMS message or an application. In this way, the user can conveniently view the position information of the parking position of the vehicle in the indoor parking lot by using an SMS message or an application, thereby improving user experience.

In a possible implementation, the method further includes: outputting, based on the traveling track of the vehicle in the indoor parking lot, floor height change information when the vehicle travels in the indoor parking lot, and/or at least a part of the traveling track of the vehicle in the indoor parking lot, where a track point on the at least a part of the traveling track includes the current position of the vehicle. In this way, the user can view the traveling track thereof and/or a height change status in the traveling process, thereby improving user experience.

In a possible implementation, in both the floor height change information and the at least a part of the traveling track, different lines are used to identify that the vehicle travels on different floors. A line that is in the floor height change information and that is for identifying a first floor is the same as a line that is in the at least a part of the traveling track and that is for identifying the first floor, and the first floor is any floor in the indoor parking lot. In this way, the user can conveniently view tracks on different floors, thereby improving user experience.

In a possible implementation, the method further includes: capturing a target image in the indoor parking lot by using the camera, where the target image is used to represent target information of the parking space in the indoor parking lot, and the target information includes one or more of the following: surrounding environment information of the parking space, and a floor on which and a zone in which the parking space is located; and outputting the target image. In this way, the user can quickly learn of, by using the image, environment information, floor information, zone information, or the like at the parking position of the vehicle. The user can search for the vehicle by using the information as a reference during vehicle finding, thereby further helping the user quickly find the vehicle.

In a possible implementation, before calculating the position information of the current position of the vehicle in the indoor parking lot based on the semantic information included in the image at the track point on the first traveling track, the method further includes: recognizing the semantic information included in the image at the track point on the first traveling track; screening the semantic information to obtain a text representing a floor class and a text representing a zone class; and obtaining semantic information related to the indoor parking lot based on the text representing the floor class and the text representing the zone class. In this way, some interference information is removed by screening the semantic information in the image, so that the semantic information related to the indoor parking lot can better reflect a correct floor and zone, thereby improving accuracy of position calculation.

In a possible implementation, calculating the position information of the current position of the vehicle in the indoor parking lot based on the semantic information included in the image at the track point on the first traveling track specifically includes: collecting statistics on semantic information included in images at different track points on the first traveling track, where semantic information corresponding to different track points on the first traveling track has different weights, and the weight is determined based on a distance between the track point on the first traveling track and the current position of the vehicle; calculating, based on a statistical result, distribution probabilities of floors and distribution probabilities of zones that are corresponding to different track points on the first traveling track; and calculating the position information of the current position of the vehicle in the indoor parking lot based on the distribution probabilities of the floors and the distribution probabilities of the zones that are corresponding to different track points on the first traveling track. In this way, different weights are allocated to semantic information of the parking lot at different track points, so that the statistical semantic information of the parking lot can be associated with the position of the vehicle, thereby improving calculation accuracy.

According to a second aspect, this application provides a vehicle finding method, applied to an electronic device and including: obtaining a view operation performed by a user on a position of a vehicle, where the vehicle is located in an indoor parking lot; and displaying position information of the vehicle in the indoor parking lot, where the position information includes a floor and/or a zone. In this way, when searching for the vehicle, the user can quickly learn of, from the electronic device, the position information of the vehicle in the indoor parking lot, for example, a floor or a zone, so that the vehicle can be found in the corresponding position information, thereby improving user experience. For example, the position information of the vehicle in the indoor parking lot may be calculated based on semantic information included in images on at least some track points on a traveling track of the vehicle on a target floor in the indoor parking lot. For details, refer to the foregoing descriptions. The target floor is a floor on which the vehicle is currently located.

In a possible implementation, the method further includes: displaying a traveling path from a position of the user to the position of the vehicle, or displaying at least some facilities on the traveling path, or displaying both the position of the user and the position of the vehicle. In this way, the user can learn of the traveling path from the current position of the user to the position of the vehicle, so that the user can quickly find the vehicle, thereby improving user experience.

In a possible implementation, the method further includes: displaying floor height change information when the vehicle travels in the indoor parking lot, and/or at least a part of a traveling track of the vehicle in the indoor parking lot, where a track point on the at least a part of the traveling track includes a current position of the vehicle. In this way, the user can visually perceive a floor height change status of the vehicle in the indoor parking lot and a part of the traveling track, thereby improving user experience.

In a possible implementation, in both the floor height change information and the at least a part of the traveling track, different lines are used to identify that the vehicle travels on different floors. A line that is in the floor height change information and that is for identifying a first floor is the same as a line that is in the at least a part of the traveling track and that is for identifying the first floor, and the first floor is any floor in the indoor parking lot. In this way, the user is conveniently notified of the floor on which the currently displayed traveling track is located, thereby improving user experience.

In a possible implementation, the method further includes: displaying at least some facilities, such as an elevator or an escalator, in a building in which the indoor parking lot is located, and/or displaying a traveling path from a parking position of the vehicle in the indoor parking lot to the elevator/escalator in the building. In this way, the user can quickly learn of a route for entering the building, thereby improving user experience.

In a possible implementation, the method further includes: displaying an image at the parking position of the vehicle in the indoor parking lot, and/or displaying an image used to represent the position information of the vehicle in the indoor parking lot. In this way, the user can learn of environment information at the parking position of the user, or the floor on which/the zone in which the vehicle is located, thereby improving user experience.

In a possible implementation, the method further includes: displaying a first image, where the first image is an image at the parking position of the vehicle in the indoor parking lot, or the first image is used to represent the position information of the vehicle in the indoor parking lot; and switching the first image to a second image in response to a first operation of the user, where the first image is different from the second image, and the second image is an image at the parking position of the vehicle in the indoor parking lot, or the second image is used to represent the position information of the vehicle in the indoor parking lot. In this way, the user may view, in a manner of image switching, an image required by the user, thereby improving user experience.

In a possible implementation, the method further includes: displaying a first image, where the first image is used to represent a floor on which or a zone in which the vehicle is located in the indoor parking lot; and switching the first image to a second image in response to a first operation of the user, where the first image is different from the second image, and the first image is used to represent the floor on which or the zone in which the vehicle is located in the indoor parking lot. In this way, the user may view, in a manner of image switching, an image required by the user, thereby improving user experience.

In a possible implementation, the view operation is: an operation of opening a new message by the user when the electronic device obtains the new message; or an operation of opening a target message by the user from a message list of the electronic device, where the target message includes the position information of the vehicle in the indoor parking lot; or an operation of selecting the position of the vehicle by the user in an application on the electronic device.

According to a third aspect, this application provides a vehicle positioning apparatus, including an image capturing module and a processing module. The image capturing module is configured to: when a vehicle travels into an indoor parking lot, capture, by using a camera in the vehicle, an image at a track point included on a traveling track of the vehicle in a traveling process of the vehicle. The processing module is configured to: obtain a first traveling track of the vehicle on a target floor in the indoor parking lot, where the target floor is a floor on which the vehicle is currently located; and calculate position information of a current position of the vehicle in the indoor parking lot based on semantic information included in an image at a track point on the first traveling track, where the position information includes a floor and/or a zone. The processing module is further configured to: when the current position of the vehicle is a parking space, output position information of the parking space in the indoor parking lot.

In a possible implementation, when a gear position of the vehicle is a parking gear, the current position of the vehicle is a parking space.

In a possible implementation, the processing module is further configured to output, based on the traveling track of the vehicle in the indoor parking lot, floor height change information when the vehicle travels in the indoor parking lot, and/or at least a part of the traveling track of the vehicle in the indoor parking lot, where a track point on the at least a part of the traveling track includes the current position of the vehicle.

In a possible implementation, the image capturing module is further configured to capture a target image in the indoor parking lot by using the camera, where the target image is used to represent target information of the parking space in the indoor parking lot, and the target information includes one or more of the following: surrounding environment information of the parking space, and a floor on which and a zone in which the parking space is located. The processing module is further configured to output the target image.

In a possible implementation, when calculating the position information of the current position of the vehicle in the indoor parking lot based on the semantic information included in the image at the track point on the first traveling track, the processing module is specifically configured to: collect statistics on semantic information included in images at different track points on the first traveling track, where semantic information corresponding to different track points on the first traveling track has different weights, and the weight is determined based on a distance between the track point on the first traveling track and the current position of the vehicle; calculate, based on a statistical result, distribution probabilities of floors and distribution probabilities of zones that are corresponding to different track points on the first traveling track; and calculate the position information of the current position of the vehicle in the indoor parking lot based on the distribution probabilities of the floors and the distribution probabilities of the zones that are corresponding to different track points on the first traveling track.

According to a fourth aspect, this application provides a vehicle finding apparatus. The apparatus may be deployed in an electronic device, for example, a mobile phone. The vehicle finding apparatus includes an obtaining module and a display module. The obtaining module is configured to obtain a view operation performed by a user on a position of a vehicle, where the vehicle is located in an indoor parking lot. The display module is configured to display position information of the vehicle in the indoor parking lot, where the position information includes a floor and/or a zone.

In a possible implementation, the display module is further configured to: display a traveling path from a position of the user to the position of the vehicle, or display at least some facilities on the traveling path, or display both the position of the user and the position of the vehicle.

In a possible implementation, the display module is further configured to display floor height change information when the vehicle travels in the indoor parking lot, and/or at least a part of a traveling track of the vehicle in the indoor parking lot, where a track point on the at least a part of the traveling track includes a current position of the vehicle.

In a possible implementation, in both the floor height change information and the at least a part of the traveling track, different lines are used to identify that the vehicle travels on different floors. A line that is in the floor height change information and that is for identifying a first floor is the same as a line that is in the at least a part of the traveling track and that is for identifying the first floor, and the first floor is any floor in the indoor parking lot.

In a possible implementation, the display module is further configured to: display at least some facilities in a building in which the indoor parking lot is located, and/or display a traveling path from a parking position of the vehicle in the indoor parking lot to an elevator/escalator in the building.

In a possible implementation, the display module is further configured to display an image at the parking position of the vehicle in the indoor parking lot, and/or display an image used to represent the position information of the vehicle in the indoor parking lot.

In a possible implementation, the display module is further configured to: display a first image, where the first image is an image at the parking position of the vehicle in the indoor parking lot, or the first image is used to represent the position information of the vehicle in the indoor parking lot; and switch the first image to a second image in response to a first operation of the user, where the first image is different from the second image, and the second image is an image at the parking position of the vehicle in the indoor parking lot, or the second image is used to represent the position information of the vehicle in the indoor parking lot.

In a possible implementation, the display module is further configured to: display a first image, where the first image is used to represent information about a floor on which or information about a zone in which the vehicle is located in the indoor parking lot; and switch the first image to a second image in response to a first operation of the user, where the first image is different from the second image, and the first image is used to represent the information about the floor on which or the information about the zone in which the vehicle is located in the indoor parking lot.

In a possible implementation, the view operation is: an operation of opening a new message by the user when the electronic device obtains the new message; or an operation of opening a target message by the user from a message list of the electronic device, where the target message includes the position information of the vehicle in the indoor parking lot; or an operation of selecting the position of the vehicle by the user in an application on the electronic device.

According to a fifth aspect, this application provides an electronic device, including: at least one memory, configured to store a program; and at least one processor, configured to execute the program stored in the memory, where when the program stored in the memory is executed, the processor is configured to perform the method described in any one of the first aspect or the possible implementations of the first aspect, or is configured to perform the method described in any one of the second aspect or the possible implementations of the second aspect.

According to a sixth aspect, this application provides a vehicle, including the electronic device described in the third aspect. In this case, the processor in the electronic device may be configured to perform the method described in any one of the first aspect or the possible implementations of the first aspect.

According to a seventh aspect, this application provides a computer-readable storage medium. The computer-readable storage medium stores a computer program, and when the computer program is run on a processor, the processor is enabled to perform the method according to any one of the first aspect or the possible implementations of the first aspect, or perform the method according to any one of the second aspect or the possible implementations of the second aspect.

According to an eighth aspect, this application provides a computer program product. When the computer program product is run on a processor, the processor is enabled to perform the method according to any one of the first aspect or the possible implementations of the first aspect, or perform the method according to any one of the second aspect or the possible implementations of the second aspect.

It may be understood that, for beneficial effects of the third aspect to the eighth aspect, refer to the related descriptions in the first aspect or the second aspect. Details are not described herein again.

### BRIEF DESCRIPTION OF DRAWINGS

The following briefly describes accompanying drawings that need to be used in descriptions of embodiments.
FIG. 1 is a diagram of a structure of a vehicle according to an embodiment of this application;
FIG. 2 is a diagram of a direction of an acceleration in a z-axis direction in a three-dimensional space when a vehicle travels on a tilted road surface and a non-tilted road surface according to an embodiment of this application;
FIG. 3 is a diagram of a floor height change after a vehicle enters an indoor parking lot from outdoors according to an embodiment of this application;
FIG. 4 is a diagram of a change of a pitch angle of a vehicle in a traveling process on a road surface according to an embodiment of this application;
FIG. 5 is a diagram of a transverse rotation angle change and a corresponding traveling track of a vehicle when traveling on a road surface according to an embodiment of this application;
FIG. 6 is a diagram of comparison between directions of a traveling track of a vehicle before and after correction by using position information of the vehicle according to an embodiment of this application;
FIG. 7 is a diagram of steps of recognizing semantic information included in an image according to an embodiment of this application;
FIG. 8 is a diagram of segmenting a zone that is in an image and that includes semantic information according to an embodiment of this application;
FIG. 9 is a diagram of a traveling track and fusing the traveling track and calculated position information of each track point in an indoor parking lot into one map according to an embodiment of this application;
FIG. 10 is a diagram of a process of selecting, based on a traveling track and a calculated zone of each track point on a floor in an indoor parking lot, a zone in which a parking position is located according to an embodiment of this application;
FIG. 11(A) and FIG. 11(B) are a diagram of interface display on an electronic device according to an embodiment of this application;
FIG. 12(A) and FIG. 12(B) are a diagram of interface display on an electronic device according to an embodiment of this application;
FIG. 13 is a diagram of interface display on an electronic device according to an embodiment of this application;
FIG. 14 is a schematic flowchart of a vehicle positioning method according to an embodiment of this application;
FIG. 15 is a schematic flowchart of a vehicle finding method according to an embodiment of this application;
FIG. 16 is a diagram of a structure of a vehicle positioning apparatus according to an embodiment of this application;
FIG. 17 is a diagram of a structure of a vehicle finding apparatus according to an embodiment of this application; and
FIG. 18 is a diagram of a structure of an electronic device according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the descriptions of embodiments of this application, unless otherwise specified, "a plurality of' means two or more. For example, a plurality of processing units are two or more processing units, and a plurality of elements are two or more elements.

Generally, a camera may be installed above a parking space in an indoor parking lot, and a server configured to perform data processing is configured at a position such as a management center of the parking lot. When a vehicle enters the indoor parking lot and is parked in the parking space, the camera at the parking space can be used to capture a license plate image of the vehicle, and the server can be used to recognize a license plate number in the license plate image. When a user has a vehicle finding requirement, the user may enter a corresponding license plate number on a vehicle finding terminal in the parking lot. Then, the vehicle finding terminal may request, from the server, position information of a vehicle corresponding to the license plate number. After the server sends the position information of the vehicle to the vehicle finding terminal, the vehicle finding terminal may display a specific position of the vehicle, so that the user can conveniently find the vehicle. Although this manner can help the user find the vehicle conveniently, because a large quantity of cameras need to be additionally added, costs are very high. In addition, when searching for the vehicle, the user usually needs to operate the vehicle finding terminal in the parking lot first. Consequently, a vehicle finding process is relatively complex, and experience is relatively poor.

In addition, a map of the indoor parking lot may be pre-stored in the vehicle. In this case, after the vehicle enters the indoor parking lot, a parking position of the vehicle on the map may be deduced based on a vehicle speed, a course angle, and the like of the vehicle. In this manner, although the user can observe the parking position of the vehicle on the map of the parking lot, the user can observe only the position of the vehicle on the map, and cannot learn of floor/zone-level position information (to be specific, the vehicle is parked in which zone on which floor). When the user is not familiar with the parking lot, it is difficult for the user to quickly find the vehicle. In addition, in this manner, the map of the indoor parking lot needs to be constructed in advance, resulting in relatively high costs.

In view of this, embodiments of this application provide a vehicle positioning method in an indoor parking lot. A traveling track of a vehicle is combined with an image captured by a camera of the vehicle, so that the vehicle is positioned in the indoor parking lot. This reduces costs of vehicle positioning in the indoor parking lot while ensuring positioning accuracy, and enables a user to learn of, within a short time after parking, a floor on which and/or a zone in which a vehicle of the user is located in the indoor parking lot, thereby improving user experience.

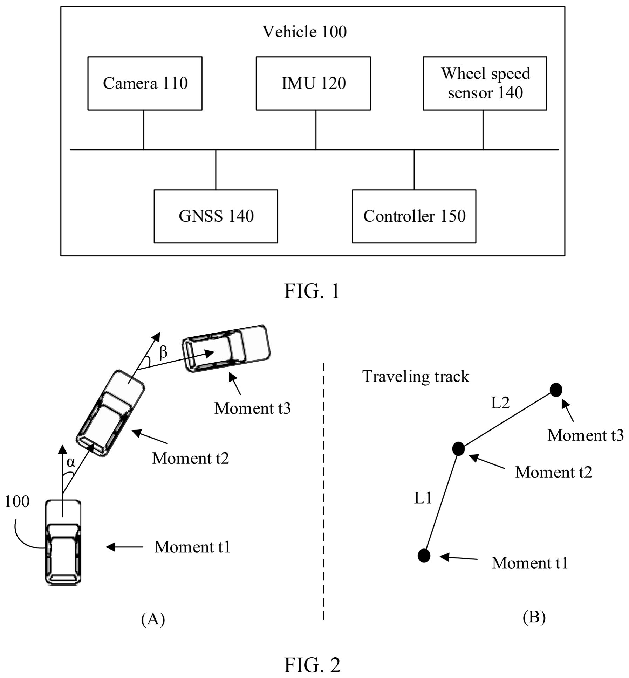

For example, FIG. 1 is a diagram of a structure of a vehicle according to an embodiment of this application. As shown in FIG. 1, the vehicle 100 may include a camera 110, an inertial measurement unit (inertial measurement unit, IMU) 120, a wheel speed sensor 130, a GNSS 140, and a controller 150.

The camera 110 is mainly configured to capture a static image or a video in front of the vehicle 100. The camera 110 may be installed on a front windshield of the vehicle 100, or may be installed at another position of the vehicle 100. This is not limited herein.

The IMU 120 is mainly configured to measure an acceleration signal and an angular velocity signal of the vehicle 100 in a three-dimensional space. The IMU 120 may mainly include an accelerometer and a gyroscope. The accelerometer is mainly configured to detect an acceleration signal of the vehicle 100 in a three-dimensional space. The gyroscope is mainly configured to detect an angular velocity signal of the vehicle 100 in a three-dimensional space.

The wheel speed sensor 130 is mainly a sensor configured to measure a wheel rotation speed of the vehicle 100. For example, the wheel speed sensor 130 may be a magnetoelectric wheel speed sensor or a Hall wheel speed sensor.

The GNSS 140 is mainly configured to position the vehicle 100 outdoors.

The controller 150 may be configured to determine, based on signal strength of the GNSS 140, whether the vehicle 100 travels into an indoor parking lot. Specifically, when the vehicle 100 enters an indoor parking lot, signal strength (for example, a carrier-to-noise ratio or a signal-to-noise ratio) of the GNSS 140 is usually lower than a preset value due to impact of an indoor space. Therefore, when the signal strength of the GNSS 140 is less than the preset value, the controller 150 may determine that the vehicle 100 travels into an indoor parking lot.

In this embodiment, the controller 150 may also be configured to: calculate a traveling track of the vehicle 100 based on data detected by the IMU 120 and the wheel speed sensor 130, and output the traveling track of the vehicle 100. Specifically, when calculating the traveling track of the vehicle 100, the controller 150 may calculate the traveling track by using a moment at which the vehicle 100 is in a stopped state as a start point and with reference to data output by the IMU 120 and the wheel speed sensor 130. For example, the vehicle 100 travels on a road surface with a tilt angle of 0°. As shown in (A) of FIG. 2, when the vehicle 100 travels from a position at a moment t1 to a position at a moment t2, it may be learned, based on an angular velocity change of the vehicle 100 in the three-dimensional space, that an angle by which the vehicle 100 rotates rightward is α, and a traveling distance of the vehicle 100 may be calculated as L1 based on data of the wheel speed sensor from the moment t2 to the moment t1. When the vehicle 100 travels from the position at the moment t2 to a position at a moment t3, it may be learned, based on an angular velocity change of the vehicle 100 in the three-dimensional space, that an angle by which the vehicle 100 rotates rightward is β, and a traveling distance of the vehicle 100 may be calculated as L2 based on data of the wheel speed sensor from the moment t3 to the moment t2. In (A) of FIG. 2, assuming that the position of the vehicle 100 at the moment t1 is known, a traveling track of the vehicle 100 shown in (B) of FIG. 2 may be calculated.

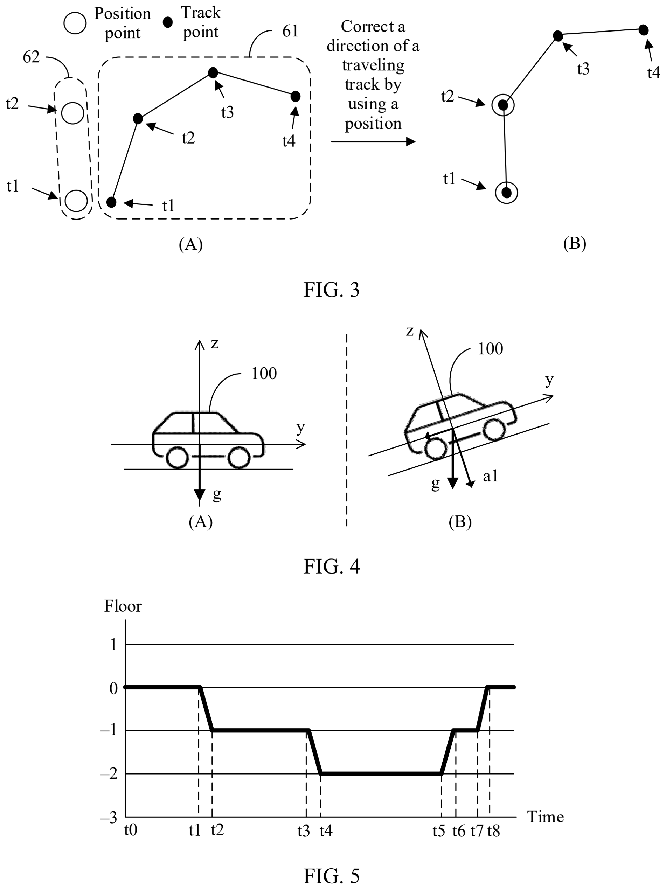

Further, the controller 150 may also be configured to correct a direction of the calculated traveling track based on a positioning result of the GNSS 140. Specifically, when the controller 150 calculates the traveling track of the vehicle 100, and positions of the vehicle 100 at some moments are unknown, although the controller 150 can calculate the traveling track of the vehicle 100, it is difficult for the controller 150 to learn of the direction of the traveling track. Therefore, the direction of the traveling track calculated by the controller 150 may be corrected by using positioning information output by the outdoor GNSS 140, so that the traveling track can better reflect a real traveling status of the vehicle 100. For example, as shown in (A) of FIG. 3, a zone 31 shows a traveling track of the vehicle 100 from the moment t1 to a moment t4, and a zone 32 shows positions of the vehicle 100 at the moment t1 and the moment t2. It can be learned from (A) of FIG. 3 that a deviation exists between a position point and a track point of the vehicle 100 at the moment t1, and an obvious deviation exists between a position point and a track point at the moment t2. Therefore, the track points at the moments t1 and t2 may be corrected by using the position points at the moments t1 and t2, and a corrected result is shown in (B) of FIG. 3. It can be learned from a combination of (A) and (B) of FIG. 3 that a direction of a traveling track shown in (B) of FIG. 3 obviously deflects leftward relative to a direction of a traveling track shown in (A) of FIG. 3, and the traveling track shown in (B) of FIG. 3 can better reflect a real traveling status of the vehicle 100. In some embodiments, before the vehicle 100 travels into an indoor parking lot, the controller 150 may correct the direction of the traveling track of the vehicle 100 at least once based on the positioning information output by the GNSS 140. Then, the controller 150 may calculate the traveling track of the vehicle 100 by using a last corrected direction as a reference and based on data detected by the IMU 120 and the wheel speed sensor 130 in a process in which the vehicle 100 travels in the indoor parking lot. In this way, it is ensured that the traveling track of the vehicle 100 in the indoor parking lot is consistent with a real traveling process of the vehicle 100.

In this embodiment, the controller 150 may be further configured to: calculate, based on the data detected by the IMU 120 and the wheel speed sensor 130, a traveling height of the vehicle 100 in a traveling process, and output a traveling height rise and fall status of the vehicle 100 in the traveling process. Specifically, the controller 150 may determine, based on an acceleration of the vehicle 100 in the three-dimensional space, whether the vehicle 100 is on a road surface with a tilt angle. For example, as shown in (A) of FIG. 4, when the vehicle 100 is on a road surface with a tilt angle of 0° (that is, a road surface without a slope), a direction of a gravity acceleration g to which the vehicle 100 is subject is parallel to a direction of a z-axis in a spatial coordinate system. In this case, the gravity acceleration g has no component on both the z-axis and a y-axis, where the z-axis is perpendicular to the ground. As shown in (B) of FIG. 4, when the vehicle 100 is on a road surface with a specific tilt angle (that is, a road surface with a slope), a direction of gravity acceleration g to which the vehicle 100 is subject has a specific angle with the direction of the z-axis in the spatial coordinate system. In this case, the gravity acceleration g has a component on both the z-axis and the y-axis. Therefore, when it is detected that an acceleration of the vehicle 100 on the z-axis is g, it may be determined that the vehicle 100 is on a road surface with a tilt angle of 0°; or when it is detected that the acceleration of the vehicle 100 on the z-axis is less than g, it may be determined that the vehicle 100 is on a road surface with a tilt angle of greater than 0°. In addition, when it is calculated that the vehicle 100 travels on a road surface with a specific tilt angle, a distance by which the vehicle 100 travels on the road surface with the tilt angle may be calculated based on wheel speed data detected by the wheel speed sensor 130. Further, a descent height or an ascent height of the vehicle 100 may be calculated based on the traveling distance of the vehicle 100 and a size of the tilt angle by using a trigonometric function formula or the like.

Further, when the vehicle 100 travels in the indoor parking lot, the controller 150 may determine, based on a magnitude relationship between the descent height of the vehicle 100 and a preset height value, whether the vehicle 100 travels on an i^{th} floor, or whether the vehicle 100 travels from the i^{th} floor to an (i-1)^{th} floor. In addition, the controller 150 may alternatively determine, based on a magnitude relationship between the ascent height of the vehicle 100 and a preset height value, whether the vehicle 100 travels on the i^{th} layer, or whether the vehicle 100 travels from the i^{th} layer to an (i+1)^{th} layer. Further, after determining whether the vehicle 100 travels on a specific floor or travels from a specific floor to another floor, the controller 150 may generate, based on a result calculated by the controller 150, a floor height change diagram of the vehicle 100 in a process of traveling in the indoor parking lot. For example, the floor height change diagram may be shown in FIG. 5. In FIG. 5, from a moment t0 to a moment t1, the vehicle 100 travels on the ground (that is, the 0^{th} floor); from the moment t1 to a moment t2, the vehicle 100 goes downhill and travels into basement level 1; from the moment t2 to a moment t3, the vehicle 100 travels on basement level 1; from the moment t3 to a moment t4, the vehicle 100 goes downhill and travels into basement level 2; from the moment t4 to a moment t5, the vehicle 100 travels on basement level 2; from the moment t5 to a moment t6, the vehicle 100 goes uphill and travels into basement level 1; from the moment t6 to a moment t7, the vehicle 100 travels on basement level 1; and from the moment t7 to a moment t8, the vehicle 100 goes uphill and travels into the ground (that is, the 0^{th} floor), and travels on the ground after the moment t8. It should be understood that FIG. 5 shows a virtual floor, not an absolute floor, and an error may exist between the virtual floor and the absolute floor.

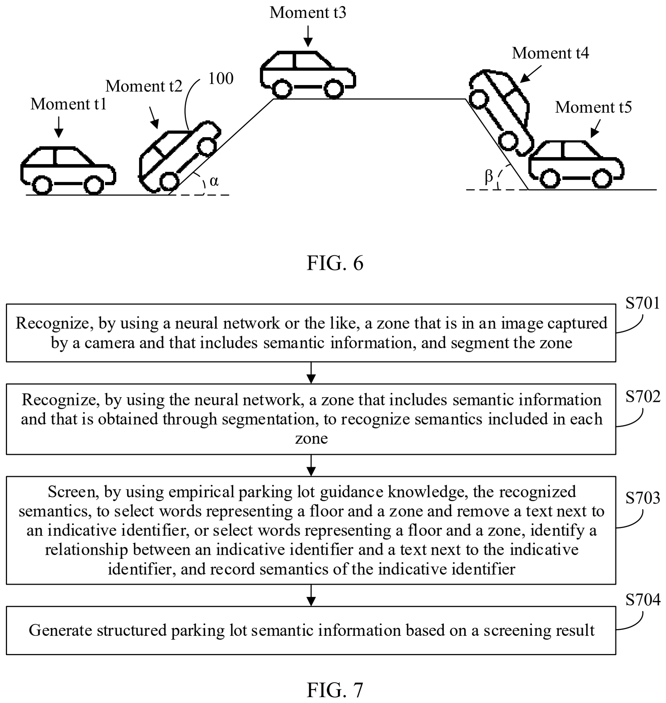

In some embodiments, when a traveling height change status of the vehicle is calculated in real time, a relatively high requirement is usually imposed on computing power of the controller 150. In consideration that a change of a pitch angle of the vehicle 100 may reflect whether the vehicle 100 travels on a flat floor or travels toward an upper floor or a lower floor, to reduce a requirement on computing power of the controller 150, a time for calculating a height change status of the vehicle 100 may be selected based on the change of the pitch angle of the vehicle 100. The controller 150 may determine the pitch angle of the vehicle 100 by combining at least the acceleration and the angular velocity of the vehicle 100 in the three-dimensional space. Specifically, when it is determined, based on the acceleration of the vehicle 100 in the three-dimensional space, that the vehicle is on a road surface with a tilt angle of 0°, it may be determined that the pitch angle of the vehicle 100 is 0°. Then, the pitch angle of the vehicle 100 may be calculated based on the angular velocity of the vehicle 100 in the three-dimensional space by using the pitch angle of 0° as a reference. For example, as shown in FIG. 6, at a moment t1, it may be calculated that a pitch angle of the vehicle 100 is 0, and in this case, the vehicle 100 travels on a flat floor. At a moment t2, an upward tilt angle of the vehicle 100 is α. Therefore, it may be determined that the pitch angle of the vehicle 100 at this moment is 0 + α = α, and in this case, the vehicle 100 travels to an upper floor. At a moment t3, a downward tilt angle of the vehicle 100 is α. Therefore, it may be determined that the pitch angle of the vehicle 100 at this moment t3 is α - α = 0, and in this case, the vehicle 100 travels on the flat floor. At a moment t4, the downward tilt angle of the vehicle 100 is β. Therefore, it may be determined that the pitch angle of the vehicle 100 at this moment t4 is 0 - β = -β, and in this case, the vehicle 100 travels to a lower floor. At a moment t5, the upward tilt angle of the vehicle 100 tilts upward is β. Therefore, it may be determined that the pitch angle of the vehicle 100 at this moment is -β + β = β, and in this case, the vehicle 100 travels on the flat floor.

In this embodiment, the controller 150 may calculate a traveling speed of the vehicle 100 based on rotation speed data that is of a wheel and that is detected by the wheel speed sensor 130 in the vehicle 100. For example, the controller 150 may process, by using an average wheel speed method, a maximum vehicle speed method, a simulation algorithm based on a kinetic model, a recursive algorithm based on a Kalman filtering method, or the like, the wheel speed data output by the wheel speed sensor 130, to obtain the traveling speed of the vehicle 100. Further, the controller 150 may calculate a traveling distance of the vehicle 100 in a period of time by using a relationship among a speed, a time, and a distance.

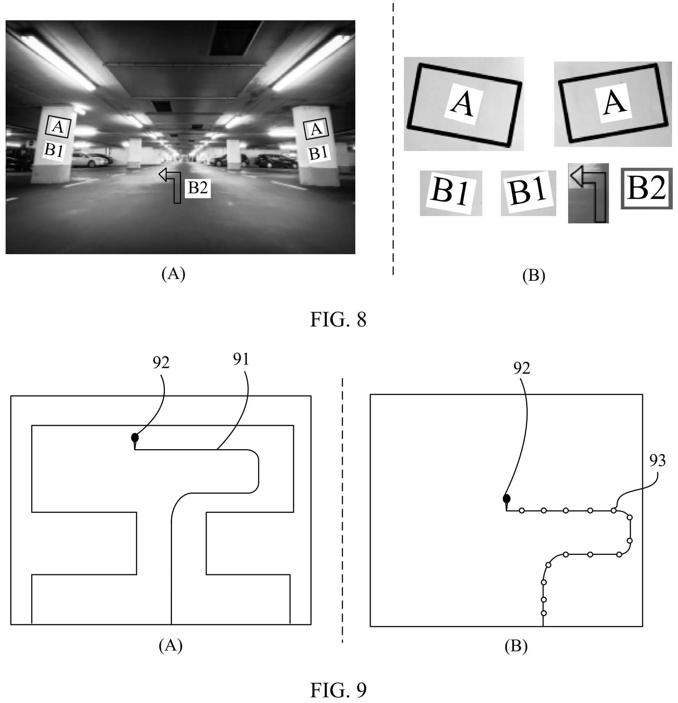

In this embodiment, the controller 150 may also be configured to: recognize, based on an image captured by the camera 110, semantic information and the like included in the image, and when the vehicle 100 is parked in an indoor parking lot, output a floor on which and/or a zone in which a parking position of the vehicle 100 is located in the parking lot. After determining that the vehicle 100 travels into the indoor parking lot, the controller 150 may recognize, in real time or periodically (for example, every 0.5 second or 1 second), the image captured by the camera 110. For example, as shown in FIG. 7, in S701, the controller 150 may first recognize, by using a neural network or the like, a zone that is in the image captured by the camera 110 and that includes semantic information, segment the zone, and output zones obtained through segmentation. For example, when the image captured by the camera 110 is an image shown in (A) of FIG. 8, the zones obtained through segmentation may be shown in (B) of FIG. 8. In S702, the controller 150 may continue to recognize, by using the neural network, the zone that includes semantic information and that is obtained through segmentation, to recognize semantics included in each zone. For example, still refer to (B) of FIG. 8. The semantics recognized in this case may be two A, two B1, one turn-left arrow, and one B2. In S703, the controller 150 may screen, by using empirical parking lot guidance knowledge (for example, Bx and Px usually represent a floor, and Vx and Zx usually represent a zone), the recognized semantics, to select words representing a floor and a zone and remove a direction marking and a text next to the direction marking (because the text next to the direction marking is usually used to explain the direction marking, the text needs to be removed), or select words representing a floor and a zone, identify a relationship between a direction marking and a text next to the direction marking, and record semantics of the direction marking. For example, a text representing a floor and a zone is selected, and a direction marking and a text next to the direction marking are removed. Still refer to (B) of FIG. 8. A result obtained through screening is: two B1 representing a floor and two A representing a zone. In S704, the controller 150 may generate structured semantic information related to the parking lot based on a screening result. For example, a text representing a floor and a zone is selected, and a direction marking and a text next to the direction marking are removed. Still refer to (B) of FIG. 8. In this case, a screening result is: two B1 representing a floor and two A representing a zone. Therefore, structured semantic information related to the parking lot may be generated as follows: floor type: B1x2, and zone type: Ax2. For example, a text representing a floor and a zone is selected, a relationship between a direction marking and a text next to the direction marking are identified, and semantics of the direction marking is recorded. Still refer to (B) of FIG. 8. In this case, a screening result is: two B1 representing a floor, A representing a zone, one turn-left arrow, and one B2 representing a floor, and the turn-left arrow being related to B2. Therefore, structured semantic information related to the parking lot may be generated as follows: floor type: B1x2, zone type: Ax2, and guidance type: B2 turn left.

Further, the controller 150 may combine the semantic information that is related to the parking lot and that is obtained by the controller 150 through calculation with the traveling track of the vehicle 100. The traveling track of the vehicle 100 in the indoor parking lot may be consistent with a corresponding position of the vehicle 100 in the parking lot. Therefore, each time obtaining, through calculation, semantic information related to the parking lot at a track point on the traveling track, the controller 150 may associate the information with the position of the vehicle 100. For example, the controller 150 may fuse, into one map, a traveling track of the vehicle 100 on a floor and semantic information that is related to the parking lot and that is at a track point on the traveling track on the floor. After it is calculated, based on the IMU 120 and the wheel speed sensor 130, that the vehicle 100 travels from one floor to another floor, data in the map may be updated, so that the data in the map is always data on a same floor. For example, a size of the map is preset, for example, has a length of 100 meters or a width of 100 meters, and a real-time position (that is, a current position or a position at a current moment) of the vehicle 100 is displayed at a central position of the map. In the map, when a track point on the traveling track has semantic information related to the parking lot, the track point may be marked. For example, as shown in FIG. 9, when a traveling track of the vehicle 100 on a floor of the parking lot is shown in (A) of FIG. 9, a result of fusing the traveling track (that is, a line 91) on the floor and calculated semantic information that is related to the parking lot and that is at each track point on the floor into one map may be shown in (B) of FIG. 9. In (A) of FIG. 9, the line 91 is obtained by connecting a plurality of track points, and a point 92 indicates a parking position or a current position of the vehicle (that is, a real-time position of the vehicle). In (B) of FIG. 9, a point 92 indicates a parking position or a current position of the vehicle. In (B) of FIG. 9, a point 93 has semantic information related to the parking lot at the track point.

Further, after the user parks the vehicle 100 at a position in the parking lot, the user may vote a zone in semantic information that is related to the parking lot and that is at each track point in a map corresponding to the parking position, and determine, based on a voting result, a zone in which the parking position of the vehicle 100 is located in the indoor parking lot. In consideration that a zone that is relatively close to the parking position has relatively high reliability, a weight may be first allocated to each zone based on a distance between the zone in the map corresponding to the parking position and the parking position of the vehicle 100, and then voting is performed on each zone, so as to improve accuracy of a voting result. In some embodiments, the parking position of the vehicle 100 may be a position when a gear position of the vehicle 100 is a parking gear (P gear). In some embodiments, to improve accuracy of the determined zone, a distribution probability of each zone may be determined based on a quantity of votes on the zone in the voting result, and when a maximum distribution probability is greater than a preset probability value, a zone corresponding to the distribution probability is used as a final result, so as to avoid selecting an incorrect zone when the distribution probability is evenly distributed.

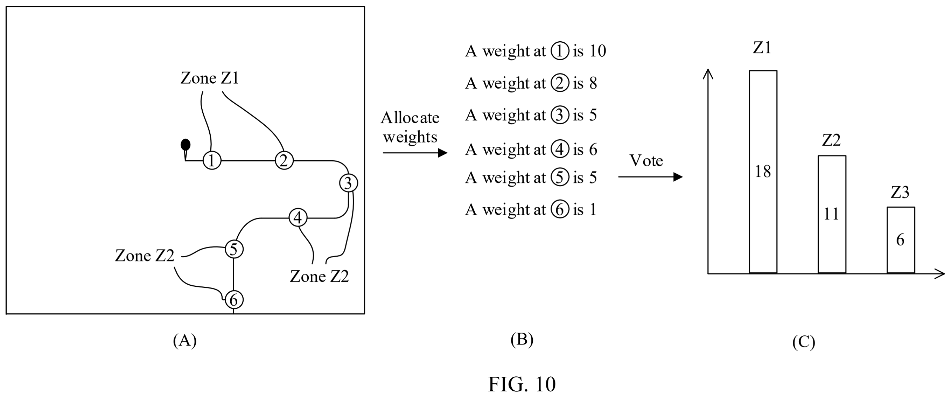

For example, refer to FIG. 10. In (A) of FIG. 10, if a zone at a track point 1 is Z1, a zone at a track point 2 is Z1, a zone at a track point 3 is Z2, a zone at a track point 4 is Z2, a zone at a track point 5 is Z3, and a zone at a track point 6 is Z3, as shown in (B) of FIG. 10, when a weight is allocated to each zone, a weight allocated to the zone at the track point 1 may be 10, a weight allocated to the zone at the track point 2 may be 8, a weight allocated to the zone at the track point 3 may be 5, a weight allocated to the zone at the track point 4 may be 6, a weight allocated to the zone at the track point 5 may be 5, and a weight allocated to the zone at the track point 6 may be 1. After weight allocation is completed, as shown in (C) of FIG. 10, it may be calculated by using the allocated weights that a quantity of votes on Z1 is: 10+8=18, a quantity of votes on Z2 is 5+6=11, and a quantity of votes on Z3 is 5+1=6. Finally, it may be determined, based on the voting result, that the zone in which the parking position of the vehicle is located is Z1. For example, when semantic information that is at a track point and that is related to a parking lot includes a plurality of zones, weights of the plurality of zones are weights allocated to the track point. Quantities of votes on the plurality of zones at the track point may be obtained by multiplying the plurality of zones by the corresponding weights respectively, and a final voting result may be obtained by combining the result and another quantity of votes.

A floor on which the parking position of the vehicle 100 is located in the indoor parking lot may be determined based on a floor on which the vehicle 100 is currently located and that is calculated by using the IMU 120 and the wheel speed sensor 130, or may be determined based on a floor that is on a map and that is corresponding to the parking position of the vehicle 100. For example, a floor that appears most frequently is selected as the floor, or the two floors are combined. For example, when the parking position of the vehicle 100 corresponds to a relatively small quantity of floors on a map, the floor may be determined based on the floor on which the vehicle 100 is currently located and that is obtained through calculation. When the parking position of the vehicle 100 corresponds to a relatively large quantity of floors on a map, the floor may be determined based on the floor that is on the map and that is corresponding to the parking position of the vehicle 100. For example, when the floor on which the parking position is located is determined based on the floor that is on the map and that is corresponding to the parking position of the vehicle 100, refer to the foregoing content of determining the zone in which the parking position is located based on the zone that is in the map and that is corresponding to the parking position of the vehicle 100. Details are not described herein again. In some embodiments, in consideration that the floor on which the vehicle 100 is currently located and that is calculated by using the IMU 120 and the wheel speed sensor 130 is a virtual floor not an absolute floor, and a floor determined based on a floor that is on a map and that is corresponding to the parking position of the vehicle 100 is a real floor, it is better to determine the floor based on the floor that is on the map and that is corresponding to the parking position of the vehicle 100.

In this embodiment, after determining position information (that is, the floor and/or the zone) of the parking position of the vehicle 100 in the indoor parking lot, the controller 150 may output the position information. For example, the controller 150 may push the position information to an electronic device used by the user, for example, a mobile phone. In this way, the user can quickly learn of, from the electronic device used by the user, a floor on which and/or a zone in which the parking position of the vehicle of the user is located in the indoor parking lot.

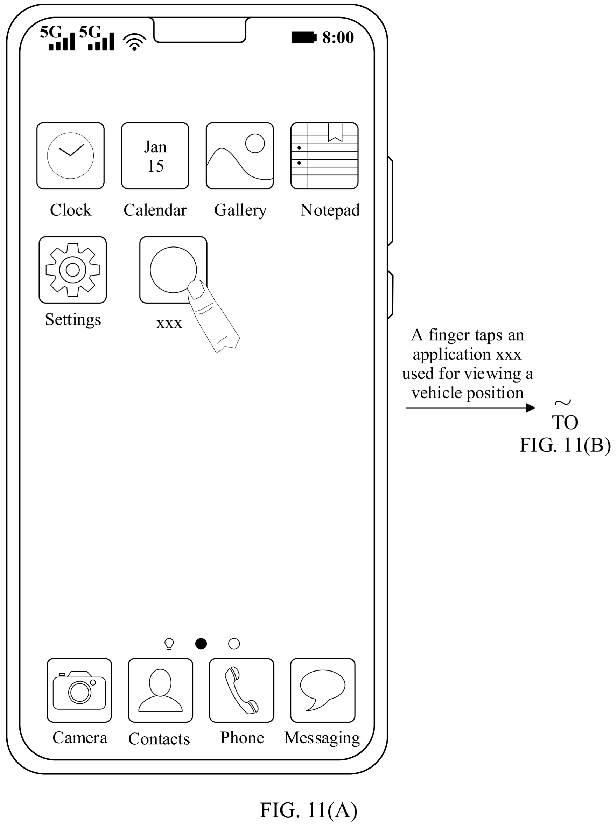

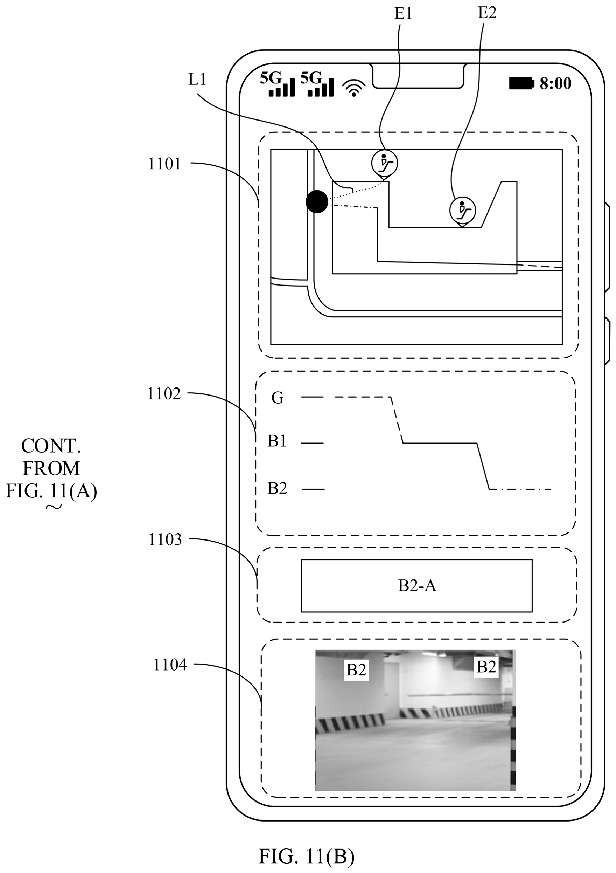

For example, the user may perform a view operation on the electronic device for the position of the vehicle. After obtaining the view operation, the electronic device may display the position information of the vehicle in the indoor parking lot on a display component such as a display screen of the electronic device. The position information may include a floor and/or a zone. For example, as shown in FIG. 11(A) and FIG. 11(B), in FIG. 11(A), if an application xxx on the electronic device is specially used to view a vehicle position, the user may tap the application, and then the electronic device may display an interface shown in FIG. 11(B). In FIG. 11(B), a zone 1103 displays position information of the vehicle in the indoor parking lot.

In addition, the controller 150 may also push, to the electronic device used by the user, a traveling track of the vehicle 100 calculated by the controller 150, floor height change information in a traveling process, an image of a surrounding environment of the parking position or an image that can represent position information of the parking position in the indoor parking lot, and the like. Then, the user may view the information by using an application (application, APP) installed on the electronic device. For example, still refer to FIG. 11(B). When displaying the position information of the vehicle in the indoor parking lot in the zone 1103, the electronic device may display a traveling track of the vehicle in a zone 1101, display a traveling height change status of the vehicle in a zone 1102, and display an image of a surrounding environment of the parking position of the vehicle in a zone 1104. In addition, when the traveling track of the vehicle is displayed, positions of some or all facilities (such as an elevator and an escalator) inside a building at the parking position of the vehicle may also be displayed. For example, still refer to FIG. 11(B). Positions of escalators E1 and E2 in the building may be displayed in the zone 1101. Further, when the positions of the elevators/the escalators inside the building at the parking position of the vehicle are displayed, a traveling path of the user from the parking position to a nearest elevator/escalator may be further displayed, so that the user quickly reaches the elevator/the escalator, thereby avoiding a waste of time due to searching for the elevator/the escalator. Still refer to FIG. 11(B). The escalators E1 and E2 may be displayed in the zone 1101, and a line L1 is displayed. A route indicated by the line L1 is a route from the parking position P to the nearest escalator E1.

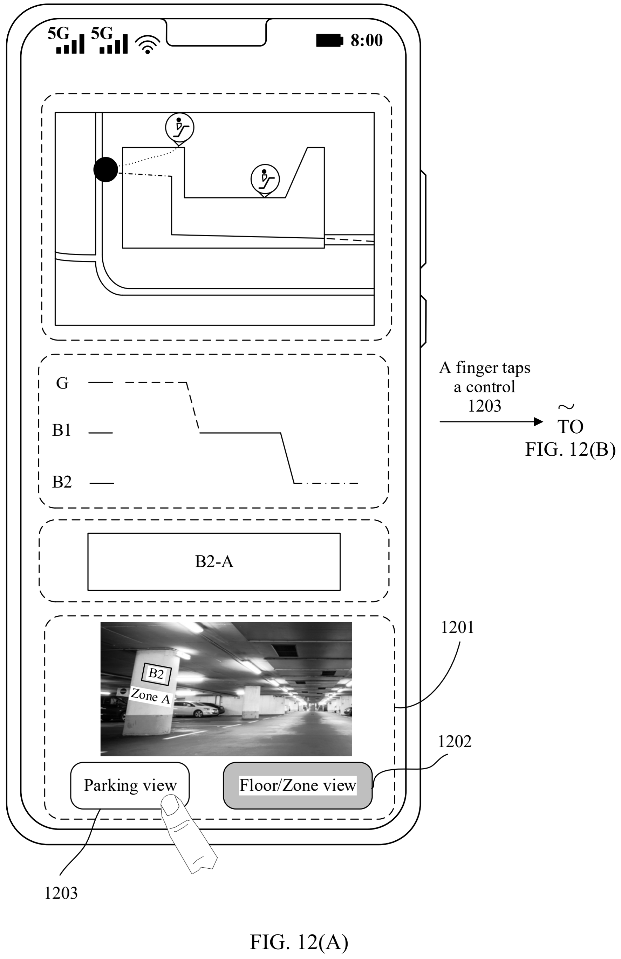

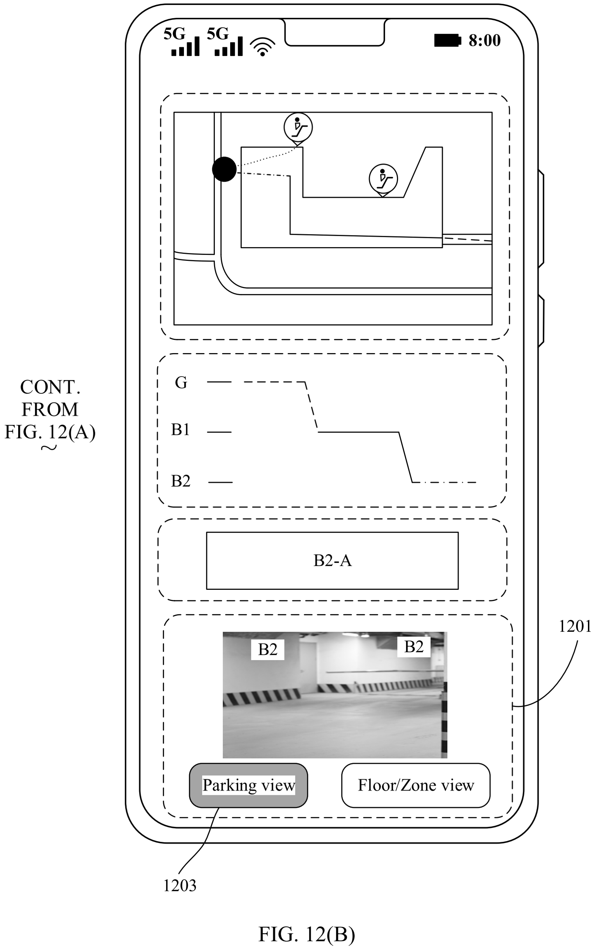

In some embodiments, the controller 150 may simultaneously push, to the electronic device used by the user, an image of a surrounding environment of the parking position and an image that can represent floor information/zone information at the parking position. In this case, the user may select an image to be viewed on the electronic device based on a requirement of the user. For example, an image at the parking position may be referred to as an "image at a parking view", and an image that can represent floor information/zone information at the parking position may be referred to as an "image at a floor/a zone view". For example, as shown in FIG. 12(A), when displaying the position information of the vehicle in the indoor parking lot, the electronic device may display, in a zone 1201, a control 1203 used to view an image at "a parking view" and a control 1202 used to view an image at "a floor/a zone view". After the user taps the control 1202 used to view the image at "the floor/the zone view", the image at "the floor/the zone view" may be displayed in the zone 1201, and a marking "B2-zone A" can be visually seen in the image. Certainly, when the user views the position of the vehicle, the electronic device may display the image at "the floor/the zone view" by default. In FIG. 12(A), after the user taps the control 1203 used to view the image at "the parking view", as shown in FIG. 12(B), the image at "the parking view" may be displayed in the zone 1201, and environment information in front of the vehicle may be visually seen in the image. Certainly, when the user does not tap the control, images corresponding to one or more default controls may be displayed. For example, both the image at "the parking view" and the image at "the floor/the zone view" are displayed, or only the image at "the parking view" is displayed, or only the image at "the floor/the zone view" is displayed. For other information displayed in FIG. 12(A) and FIG. 12(B), refer to the description in FIG. 11(B). Details are not described herein again.

In addition, in FIG. 12(B), the control used to view the image at "the floor/the zone view" may also be replaced with "a control used to view an image at "a floor view" and "a control used to view an image at "a zone view". In this case, after the user taps the control used to view the image at "the floor view", an image that can represent a floor of the vehicle in the indoor parking lot may be displayed. After the user taps the control used to view the image at "the zone view", an image that can represent a zone in which the vehicle is located in the indoor parking lot may be displayed. In some other embodiments, the electronic device may simultaneously display an image of a surrounding environment of the parking position and an image that can represent a floor on which/a zone in which the parking position is located. Then, the user may select, based on a requirement of the user, an image that the user wants to view, for example, view the image of the surrounding environment of the parking position. For example, the image of the surrounding environment of the parking position may be used to represent environment information around the parking position, for example, an object that exists in front of the vehicle when the vehicle is parked. In other words, in this embodiment, when the electronic device displays an image, after the electronic device obtains an operation of viewing another image by the user, the electronic device may switch an image that is being displayed by the electronic device to an image that the user needs to view.

In addition, to help the user learn of an association between the traveling track and the traveling height change status of the vehicle 100, traveling tracks at corresponding heights may be further marked by using different colors or lines at different heights. For example, still refer to FIG. 11(B). In the zone 1102, tracks of the vehicle at different traveling heights may be identified by using different lines, and in the zone 1102, different traveling heights are also identified by using corresponding lines.

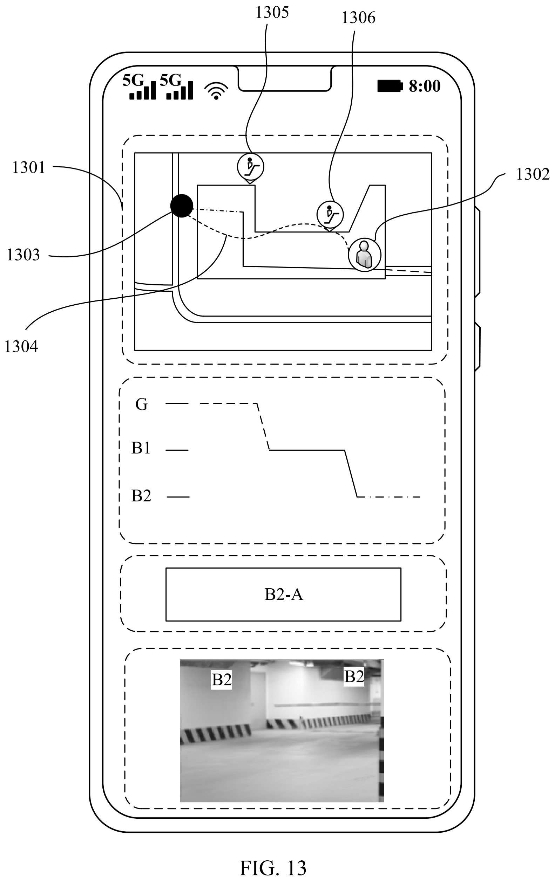

In some embodiments, when the user views the position information of the vehicle in the parking lot, the electronic device may further display a traveling path from a position of the user to the position of the vehicle, or display at least some facilities on the traveling path, or display both the position of the user and the position of the vehicle. In this way, the user can learn of the traveling path from the current position of the user to the position of the vehicle, so that the user can quickly find the vehicle, thereby improving user experience. For example, as shown in FIG. 13, a position 1302 of the user, a position 1303 of the vehicle, and a traveling path 1304 from the position 1302 of the user to the position 1303 of the vehicle may be displayed in a zone 1301 in a display interface of the electronic device. In addition, in FIG. 13, facilities such as an escalator/an elevator in a building to which an indoor parking lot in which the vehicle is located belongs may be further displayed, for example, escalators 1305 and 1306. For other information displayed in FIG. 13, refer to the description in FIG. 11(B). Details are not described herein again.

It should be understood that, in this embodiment, when displaying the position information of the vehicle in the indoor parking lot, the electronic device may display all types of information described above at the same time, or may display the information in a time division manner. For example, only when the user chooses to display a specific piece of information, the information is displayed. This may be specifically determined based on an actual situation, and is not limited herein.

The foregoing describes the vehicle 100 and the like provided in the embodiment of this application. The following describes, based on the content in the foregoing embodiment, a vehicle positioning method and a vehicle finding method provided in embodiments of this application. For some or all of the following content, refer to the foregoing related descriptions.

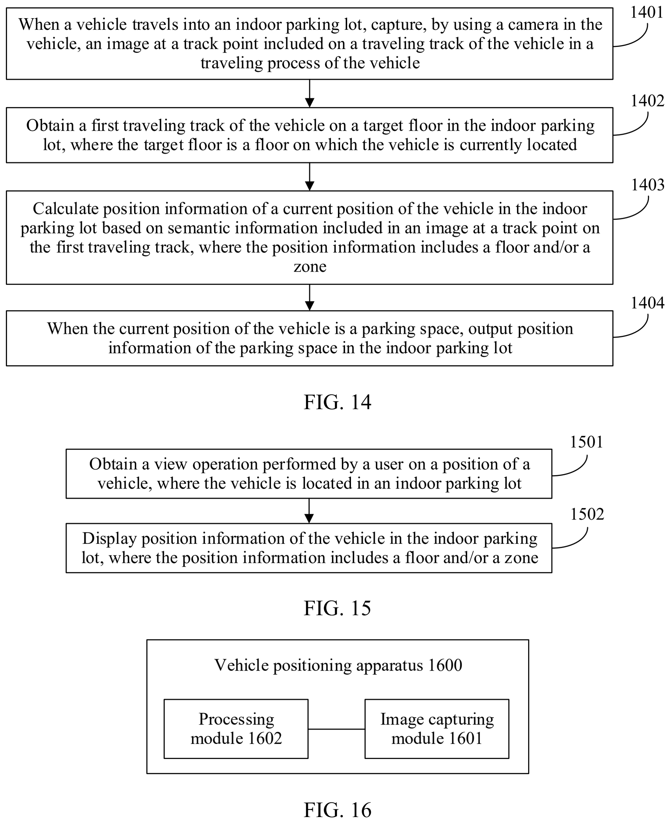

For example, FIG. 14 is a schematic flowchart of a vehicle positioning method according to an embodiment of this application. As shown in FIG. 14, the vehicle positioning method may include the following steps.

S1401: When a vehicle travels into an indoor parking lot, capture, by using a camera in the vehicle, an image at a track point included on a traveling track of the vehicle in a traveling process of the vehicle.

In this embodiment, after the vehicle travels into the indoor parking lot, an image at a track point included on the traveling track of the vehicle may be captured by using the camera in the vehicle in the traveling process of the vehicle. For example, in the traveling process of the vehicle, the camera in the vehicle may capture an image in front of the vehicle in real time or periodically, to obtain an image of the vehicle at a track point included on the traveling track of the vehicle. For example, a track point on the traveling track may be used to represent that the vehicle is located at a specific position in the traveling process. For example, because quality of a communication signal in an indoor parking lot is usually relatively poor, when signal strength of a GNSS in the vehicle is less than a preset value, it may be determined that the vehicle travels into an indoor parking lot.

S1402: Obtain a first traveling track of the vehicle on a target floor in the indoor parking lot, where the target floor is a floor on which the vehicle is currently located.

In this embodiment, the traveling track of the vehicle may be calculated by using data detected by an inertial measurement unit and a wheel speed sensor in the vehicle. A direction of the traveling track may be determined based on positioning information of a GNSS on the vehicle when the vehicle travels outdoors. After the traveling track of the vehicle is calculated, the first traveling track may be obtained from the traveling track on the floor on which the vehicle is currently located. For example, the first traveling track may be a track in a preset range that is in the calculated traveling track and that uses a current position of the vehicle as a center.

S1403: Calculate position information of a current position of the vehicle in the indoor parking lot based on semantic information included in an image at a track point on the first traveling track, where the position information includes a floor and/or a zone.

In this embodiment, after the first traveling track is obtained, semantic information included in an image at each track point on the traveling track may be recognized, to obtain semantic information that is included in the image and that is related to the parking lot, for example, floor type information and zone type information. After the semantic information that is included in the image at each track point and that is related to the parking lot is calculated, statistics may be collected on the obtained semantic information related to the parking lot, to obtain the position information of the current position of the vehicle in the indoor parking lot. The position information includes a floor and/or a zone. For a calculation process, refer to the foregoing description of the controller 150 in FIG. 1. Details are not described herein again. For example, the current position of the vehicle may be a real-time position of the vehicle in the indoor parking lot, for example, a position 10 meters away from an entrance on basement level 1 of the indoor parking lot. The position information of the current position of the vehicle in the indoor parking lot may be a target floor of the vehicle in the indoor parking lot and/or a zone on the target floor, for example, a zone A on basement level 1. In addition, the zone included in the position information may be understood as one of a plurality of zones into which a parking zone on a floor is divided. For example, when a parking zone on basement level 1 in the indoor parking lot is divided into three zones: A, B, and C, if the current position of the vehicle is the zone B, the zone in the position information may be the zone B. For example, a position of a parking space may be understood as a position of the vehicle when a gear position of the vehicle is a parking gear.

S1404: When the current position of the vehicle is a parking space, output position information of the parking space in the indoor parking lot.

In this embodiment, when the vehicle is parked in a parking space in the indoor parking lot, that is, when the current position of the vehicle is a parking space, the position information of the parking space in which the vehicle is located in the indoor parking lot may be output. For example, the position information of the parking space in the indoor parking lot may be output by using an SMS message or an application. In this way, the user can quickly learn of a floor on which and/or a zone in which the vehicle of the user is parked in the indoor parking lot, and can quickly find the vehicle. For example, in a process of using a vehicle, generally, after the vehicle stops and the engine is turned off, a driver usually needs to move a gear position of the vehicle to a parking gear. Therefore, when the gear position of the vehicle is the parking gear, it may be considered that a current position of the vehicle is a parking space.

In this way, the traveling track of the vehicle is combined with the image captured by the camera of the vehicle, so that the vehicle is positioned in the indoor parking lot. This reduces costs of vehicle positioning in the indoor parking lot while ensuring positioning accuracy, and enables the user to learn of the position of the vehicle of the user in a short time after the vehicle is parked, thereby improving user experience.

In some embodiments, in addition to the position information of the parking space in which the vehicle is located in the indoor parking lot, floor height change information when the vehicle travels in the indoor parking lot, and/or at least a part of the traveling track of the vehicle in the indoor parking lot may be output based on the traveling track of the vehicle. In this way, the user can view the traveling track thereof and/or a height change status in the traveling process, thereby improving user experience. The floor height change information may be determined based on images at different track points on the traveling track, or may be determined based on data of the IMU and the wheel speed sensor in the vehicle in the traveling process. For details, refer to the foregoing description of the controller 150 in FIG. 1. Details are not described herein again.

In some embodiments, to further facilitate quick vehicle finding by the user, the camera may be further used to capture a target image in the indoor parking lot. The target image may be used to represent target information of the parking space in which the vehicle is located in indoor parking. The target information includes one or more of information about a surrounding environment of the parking space, and the floor on which and the zone in which the parking space is located. In addition, the captured target image is output. In this way, the user can quickly learn of, by using the target image, the environment information, the floor, the zone, or the like at the parking position of the vehicle, and can search for the vehicle by using the information as a reference during vehicle finding.

For example, FIG. 15 is a schematic flowchart of a vehicle finding method according to an embodiment of this application. The method may be performed by, but is not limited to, an electronic device (such as a mobile phone) used by a user. As shown in FIG. 15, the vehicle finding method may include the following steps.

S1501: Obtain a view operation performed by a user on a position of a vehicle, where the vehicle is located in an indoor parking lot.

In this embodiment, the user may perform a view operation on the position of the vehicle on the electronic device. Then, the electronic device may obtain the operation. The vehicle viewed by the user is located in the indoor parking lot. For example, the view operation may be an operation of opening a new message by the user when the terminal device obtains the new message; or an operation of opening a target message by the user from a message list of the terminal device, where the target message includes the position information of the vehicle in the indoor parking lot; or an operation of selecting the position of the vehicle by the user in an application on the terminal device.

S1502: Display position information of the vehicle in the indoor parking lot, where the position information includes a floor and/or a zone.

In this embodiment, after obtaining the view operation of the user, the electronic device may display the position information of the vehicle in the indoor parking lot on a display screen of the electronic device. The position information includes a floor on which and/or a zone in which the vehicle is located in the indoor parking lot. For example, content shown in the zone 1103 in FIG. 11(B) is displayed. For example, the position information of the vehicle in the indoor parking lot may be calculated based on semantic information included in images on at least some track points on a traveling track of the vehicle on a target floor in the indoor parking lot. For details, refer to the foregoing descriptions. Details are not described herein again. The target floor is a floor on which the vehicle is currently located.

In this way, when searching for the vehicle, the user can quickly learn of, from the electronic device, the position information of the vehicle in the indoor parking lot, for example, a floor or a zone, so that the vehicle can be found in the corresponding position information, thereby improving user experience.

In some embodiments, the electronic device may further display floor height change information when the vehicle travels in the indoor parking lot, for example, display content shown in the zone 1102 in FIG. 11(B); and/or at least a part of the traveling track of the vehicle in the indoor parking lot, where a track point on the at least a part of the traveling track includes a current position of the vehicle, for example, display content shown in the zone 1101 in FIG. 11(B). In this way, the user can visually perceive a floor height change status of the vehicle in the indoor parking lot and a part of the traveling track, thereby improving user experience.

Further, when both the floor height change information and the at least a part of the traveling track are displayed, in both the floor height change information and the at least a part of the traveling track, different lines are used to identify that the vehicle travels on different floors. A line that is in the floor height change information and that is for identifying a first floor is the same as a line that is in the at least a part of the traveling track and that is for identifying the first floor, and the first floor is any floor in the indoor parking lot. In this way, the user is conveniently notified of the floor on which the currently displayed traveling track is located, thereby improving user experience.

In some embodiments, the electronic device may further display an image at a parking position of the vehicle in the indoor parking lot (that is, the foregoing image at the parking view), for example, display content shown in the zone 1201 in FIG. 12(B); and/or display an image used to represent the position information of the vehicle in the indoor parking lot, for example, display content shown in the zone 1201 in FIG. 12(A). In this way, the user can learn of environment information at the parking position of the user, or the floor on which/the zone in which the vehicle is located, thereby improving user experience.

In some embodiments, the electronic device may further display a first image. The first image is an image at the parking position of the vehicle in the indoor parking lot, or the first image is used to represent the position information of the vehicle in the indoor parking lot. Then, the user may deliver an image switching instruction or perform an operation of this type. After obtaining the operation or the instruction of the user, the electronic device may switch the first image to a second image. The first image is different from the second image, and the second image is an image at the parking position of the vehicle in the indoor parking lot, or the second image is used to represent the position information of the vehicle in the indoor parking lot. In this way, the user may view, in a manner of image switching, an image required by the user, thereby improving user experience. For example, still refer to FIG. 12(A) and FIG. 12(B). An image shown in the zone 1201 in FIG. 12(A) may be the "first image", and an image shown in the zone 1201 in FIG. 12(B) may be the "second image".

In some embodiments, the electronic device may further display a first image. The first image is used to represent a floor on which or a zone in which the vehicle is located in the indoor parking lot. Then, the user may deliver an image switching instruction or perform an operation of this type. After obtaining the operation or the instruction of the user, the electronic device may switch the first image to the second image. The first image is different from the second image, and the first image is used to represent the floor on which or the zone in which the vehicle is located in the indoor parking lot. In this way, the user may view, in a manner of image switching, an image required by the user, thereby improving user experience.

It may be understood that sequence numbers of the steps in the foregoing embodiments do not mean execution sequences. The execution sequences of the processes should be determined based on functions and internal logic of the processes, and should not be construed as any limitation on implementation processes of embodiments of this application. In addition, in some possible implementations, the steps in the foregoing embodiments may be selectively performed based on an actual situation. This is not limited herein.

The foregoing describes the vehicle positioning method and the vehicle finding method provided in embodiments of this application. The following describes, based on the method in the foregoing embodiment, a vehicle positioning apparatus provided in an embodiment of this application.

For example, FIG. 16 is a diagram of a structure of a vehicle positioning apparatus according to an embodiment of this application. As shown in FIG. 16, the vehicle positioning apparatus 1600 may include an image capturing module 1601 and a processing module 1602. The image capturing module 1601 is configured to: when a vehicle travels into an indoor parking lot, capture, by using a camera in the vehicle, an image at a track point included on a traveling track of the vehicle in a traveling process of the vehicle. The processing module 1602 is configured to: obtain a first traveling track of the vehicle on a target floor in the indoor parking lot, where the target floor is a floor on which the vehicle is currently located; and calculate position information of a current position of the vehicle in the indoor parking lot based on semantic information included in an image at a track point on the first traveling track, where the position information includes a floor and/or a zone. The processing module 1602 is further configured to: when the current position of the vehicle is a parking space, output position information of the parking space in the indoor parking lot.

In some embodiments, when a gear position of the vehicle is a parking gear, the current position of the vehicle is a parking space.

In some embodiments, the processing module 1602 is further configured to output, based on the traveling track of the vehicle in the indoor parking lot, floor height change information when the vehicle travels in the indoor parking lot, and/or at least a part of the traveling track of the vehicle in the indoor parking lot, where a track point on the at least a part of the traveling track includes the current position of the vehicle.

In some embodiments, the image capturing module 1601 is further configured to capture a target image in the indoor parking lot by using the camera, where the target image is used to represent target information of the parking space in the indoor parking lot, and the target information includes one or more of the following: surrounding environment information of the parking space, and a floor on which and a zone in which the parking space is located. The processing module 1602 is further configured to output the target image.

In some embodiments, when calculating the position information of the current position of the vehicle in the indoor parking lot based on the semantic information included in the image at the track point on the first traveling track, the processing module 1602 is specifically configured to: collect statistics on semantic information included in images at different track points on the first traveling track, where semantic information corresponding to different track points on the first traveling track has different weights, and the weight is determined based on a distance between the track point on the first traveling track and the current position of the vehicle; calculate, based on a statistical result, distribution probabilities of floors and distribution probabilities of zones that are corresponding to different track points on the first traveling track; and calculate the position information of the current position of the vehicle in the indoor parking lot based on the distribution probabilities of the floors and the distribution probabilities of the zones that are corresponding to different track points on the first traveling track.

It should be understood that the foregoing apparatus is configured to perform the vehicle positioning method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

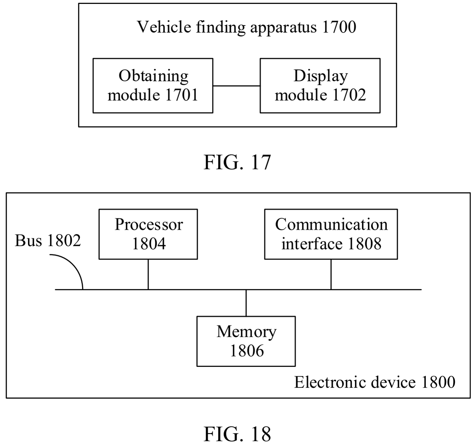

For example, FIG. 17 is a diagram of a structure of a vehicle finding apparatus according to an embodiment of this application. As shown in FIG. 17, the vehicle finding apparatus 1700 may include an obtaining module 1701 and a display module 1702. The obtaining module 1701 is configured to obtain a view operation performed by a user on a position of a vehicle, where the vehicle is located in an indoor parking lot. The display module 1702 is configured to display position information of the vehicle in the indoor parking lot, where the position information includes a floor and/or a zone.

In some embodiments, the display module 1702 is further configured to: display a traveling path from a position of the user to the position of the vehicle, or display at least some facilities on the traveling path, or display both the position of the user and the position of the vehicle.

In some embodiments, the display module 1702 is further configured to display floor height change information when the vehicle travels in the indoor parking lot, and/or at least a part of a traveling track of the vehicle in the indoor parking lot, where a track point on the at least a part of the traveling track includes a current position of the vehicle.

In some embodiments, in both the floor height change information and the at least a part of the traveling track, different lines are used to identify that the vehicle travels on different floors. A line that is in the floor height change information and that is for identifying a first floor is the same as a line that is in the at least a part of the traveling track and that is for identifying the first floor, and the first floor is any floor in the indoor parking lot.

In some embodiments, the display module 1702 is further configured to: display at least some facilities in a building in which the indoor parking lot is located, and/or display a traveling path from a parking position of the vehicle in the indoor parking lot to an elevator/escalator in the building.

In some embodiments, the display module 1702 is further configured to display an image at the parking position of the vehicle in the indoor parking lot, and/or display an image used to represent the position information of the vehicle in the indoor parking lot.

In some embodiments, the display module 1702 is further configured to: display a first image, where the first image is an image at the parking position of the vehicle in the indoor parking lot, or the first image is used to represent the position information of the vehicle in the indoor parking lot; and switch the first image to a second image in response to a first operation of the user, where the first image is different from the second image, and the second image is an image at the parking position of the vehicle in the indoor parking lot, or the second image is used to represent the position information of the vehicle in the indoor parking lot.

In some embodiments, the display module 1702 is further configured to: display a first image, where the first image is used to represent information about a floor on which or information about a zone in which the vehicle is located in the indoor parking lot; and switch the first image to a second image in response to a first operation of the user, where the first image is different from the second image, and the first image is used to represent the information about the floor on which or the information about the zone in which the vehicle is located in the indoor parking lot.

In some embodiments, the view operation of the user is: an operation of opening a new message by the user when the electronic device obtains the new message; or an operation of opening a target message by the user from a message list of the electronic device, where the target message includes the position information of the vehicle in the indoor parking lot; or an operation of selecting the position of the vehicle by the user in an application on the electronic device.

It should be understood that the foregoing apparatus is configured to perform the vehicle finding method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

Based on the methods in the foregoing embodiments, an embodiment of this application further provides an electronic device 1800. As shown in FIG. 18, the electronic device 1800 includes a bus 1802, a processor 1804, a memory 1806, and a communication interface 1808. The processor 1804, the memory 1806, and the communication interface 1808 communicate with each other through the bus 1802. The electronic device 1800 may be but is not limited to the vehicle described above, an in-vehicle terminal or an in-vehicle computer in the vehicle, a chip, a mobile phone, or the like. It should be understood that a quantity of processors and memories in the electronic device 1800, and a specific type of the electronic device are not limited in this application.

The bus 1802 may be a peripheral component interconnect (peripheral component interconnect, PCI) bus, an extended industry standard architecture (extended industry standard architecture, EISA) bus, and or the like. Buses may be classified into an address bus, a data bus, a control bus, and the like. For ease of representation, only one line is used in FIG. 18 for representation, but it does not mean that there is only one bus or only one type of bus. The bus 1804 may include a path for transmitting information between components (for example, the memory 1806, the processor 1804, and the communication interface 1808) of the electronic device 1800.

The processor 1804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1806 may include a volatile memory (volatile memory), for example, a random access memory (random access memory, RAM). The processor 1804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1806 stores executable program code, and the processor 1804 executes the executable program code to separately implement functions of the modules in FIG. 16 or FIG. 17, so as to implement all or some of the steps of the method in the foregoing embodiment. In other words, the memory 1806 stores instructions for performing all or some of the steps of the method in the foregoing embodiment.

Alternatively, the memory 1806 stores executable code, and the processor 1804 executes the executable code to separately implement functions of the vehicle positioning apparatus 1600 or the vehicle finding apparatus 1700 described above, so as to implement all or some of the steps of the method in the foregoing embodiment. In other words, the memory 1806 stores instructions for performing all or some of the steps of the method in the foregoing embodiment.

The communication interface 1803 uses a transceiver module, for example, but not limited to, a network interface card or a transceiver, to implement communication between the electronic device 1800 and another device or a communication network.

Based on the methods in the foregoing embodiments, an embodiment of this application provides a vehicle. The vehicle may include the electronic device 1800 described in FIG. 18. In this case, the processor in the electronic device 1800 may be configured to perform the foregoing vehicle positioning method. For example, the vehicle may be the vehicle 100 described in FIG. 1.

Based on the method in the foregoing embodiment, an embodiment of this application provides a computer-readable storage medium. The computer-readable storage medium stores a computer program. When the computer program is run on a processor, the processor is enabled to perform the method in the foregoing embodiment.

Based on the method in the foregoing embodiment, an embodiment of this application provides a computer program product. When the computer program product is run on a processor, the processor is enabled to perform the method in the foregoing embodiment.

It should be understood that steps in the foregoing method embodiments may be implemented by using a logic circuit in a form of hardware or instructions in a form of software in the processor.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not used to limit the scope of embodiments of this application.

## Claims

1. A vehicle positioning method, comprising:
when a vehicle travels into an indoor parking lot, capturing, by using a camera in the vehicle, an image at a track point comprised on a traveling track of the vehicle in a traveling process of the vehicle;
obtaining a first traveling track of the vehicle on a target floor in the indoor parking lot, wherein the target floor is a floor on which the vehicle is currently located;
calculating position information of a current position of the vehicle in the indoor parking lot based on semantic information comprised in an image at a track point on the first traveling track, wherein the position information comprises a floor and/or a zone; and
when the current position of the vehicle is a parking space, outputting position information of the parking space in the indoor parking lot.

2. The method according to claim 1, wherein when a gear position of the vehicle is a parking gear, the current position of the vehicle is a parking space.

3. The method according to claim 1 or 2, wherein outputting the position information of the parking space in the indoor parking lot specifically comprises:
outputting the position information of the parking space in the indoor parking lot by using an SMS message or an application.

4. The method according to any one of claims 1 to 3, wherein the method further comprises:
outputting, based on the traveling track of the vehicle in the indoor parking lot, floor height change information when the vehicle travels in the indoor parking lot, and/or at least a part of the traveling track of the vehicle in the indoor parking lot, wherein a track point on the at least a part of the traveling track comprises the current position of the vehicle.

5. The method according to any one of claims 1 to 4, wherein the method further comprises:
capturing a target image in the indoor parking lot by using the camera, wherein the target image is used to represent target information of the parking space in the indoor parking lot, and the target information comprises one or more of the following: surrounding environment information of the parking space, and a floor on which and a zone in which the parking space is located; and
outputting the target image.

6. The method according to any one of claims 1 to 5, wherein calculating the position information of the current position of the vehicle in the indoor parking lot based on the semantic information comprised in the image at the track point on the first traveling track specifically comprises:
collecting statistics on semantic information comprised in images at different track points on the first traveling track, wherein semantic information corresponding to different track points on the first traveling track has different weights, and the weight is determined based on a distance between the track point on the first traveling track and the current position of the vehicle;
calculating, based on a statistical result, distribution probabilities of floors and distribution probabilities of zones that are corresponding to different track points on the first traveling track; and
calculating the position information of the current position of the vehicle in the indoor parking lot based on the distribution probabilities of the floors and the distribution probabilities of the zones that are corresponding to different track points on the first traveling track.

7. A vehicle finding method, applied to an electronic device and comprising:
obtaining a view operation performed by a user on a position of a vehicle, wherein the vehicle is located in an indoor parking lot; and
displaying position information of the vehicle in the indoor parking lot, wherein the position information comprises a floor and/or a zone.

8. The method according to claim 7, further comprising:
displaying a traveling path from a position of the user to the position of the vehicle, or displaying at least some facilities on the traveling path, or displaying both the position of the user and the position of the vehicle.

9. The method according to claim 7 or 8, further comprising:
displaying floor height change information when the vehicle travels in the indoor parking lot, and/or at least a part of a traveling track of the vehicle in the indoor parking lot, wherein a track point on the at least a part of the traveling track comprises a current position of the vehicle.

10. The method according to claim 9, wherein in both the floor height change information and the at least a part of the traveling track, different lines are used to identify that the vehicle travels on different floors; and
a line that is in the floor height change information and that is for identifying a first floor is the same as a line that is in the at least a part of the traveling track and that is for identifying the first floor, and the first floor is any floor in the indoor parking lot.

11. The method according to any one of claims 7 to 10, further comprising:
displaying at least some facilities in a building in which the indoor parking lot is located, and/or displaying a traveling path from a parking position of the vehicle in the indoor parking lot to an elevator/escalator in the building.

12. The method according to any one of claims 7 to 11, further comprising:
displaying an image at the parking position of the vehicle in the indoor parking lot, and/or displaying an image used to represent the position information of the vehicle in the indoor parking lot.

13. The method according to any one of claims 7 to 11, further comprising:
displaying a first image, wherein the first image is an image at the parking position of the vehicle in the indoor parking lot, or the first image is used to represent the position information of the vehicle in the indoor parking lot; and
switching the first image to a second image in response to a first operation of the user, wherein the first image is different from the second image, and the second image is an image at the parking position of the vehicle in the indoor parking lot, or the second image is used to represent the position information of the vehicle in the indoor parking lot.

14. The method according to any one of claims 7 to 11, further comprising:
displaying a first image, wherein the first image is used to represent a floor on which or a zone in which the vehicle is located in the indoor parking lot; and
switching the first image to a second image in response to a first operation of the user, wherein the first image is different from the second image, and the first image is used to represent the floor on which or the zone in which the vehicle is located in the indoor parking lot.

15. The method according to any one of claims 7 to 11, wherein the view operation is:
an operation of opening a new message by the user when the electronic device obtains the new message; or
an operation of opening a target message by the user from a message list of the electronic device, wherein the target message comprises the position information of the vehicle in the indoor parking lot; or
an operation of selecting the position of the vehicle in an application on the electronic device by the user.

16. An electronic device, comprising:
at least one memory, configured to store a program; and
at least one processor, configured to execute the program stored in the memory, wherein
when the program stored in the memory is executed, the processor is configured to perform the method according to any one of claims 1 to 6, or is configured to perform the method according to any one of claims 7 to 15.

17. A vehicle, comprising the electronic device according to claim 19, wherein a processor in the electronic device is configured to perform the method according to any one of claims 1 to 6.

18. A computer-readable storage medium, wherein the computer-readable storage medium stores a computer program, and when the computer program is run on a processor, the processor is enabled to perform the method according to any one of claims 1 to 6, or perform the method according to any one of claims 7 to 15.

19. A computer program product, wherein when the computer program product is run on a processor, the processor is enabled to perform the method according to any one of claims 1 to 6, or perform the method according to any one of claims 7 to 15.
